# EUROPÄISCHE PATENTANMELDUNG

(11) **EP 2 134 023 A1**
(43) Veröffentlichungstag der Anmeldung: **16.12.2009**
(21) Anmeldenummer: 08010525.7
(22) Anmeldetag: 10.06.2008
(51) Int. Cl.: H04L 1/16, H04B 7/26, H04L 1/18

(54) **Verfahren zur Kommunikation in einem Drahtlosnetzwerk**

(71) Anmelder: SIEMENS AKTIENGESELLSCHAFT, 80333 München (DE)
(72) Erfinder: Lahner, Frank, 92224 Amberg (DE); Völkel, Thomas, 90518 Altdorf (DE)

(57) **Zusammenfassung**

Erfindungsgemäß wird ein zeitschlitzbasiertes Verfahren zur drahtlosen Kommunikation in einem Netzwerk mit einem Master und mehreren Geräten hinsichtlich der Bestätigungsdauer verbessert. Hierzu werden die Bestätigungen für eine Gruppe von Geräten in einem Bestätigungstelegramm zusammengefasst.

## Beschreibung

Die Erfindung betrifft ein Verfahren zur drahtlosen Kommunikation in einem Netzwerk mit einem Master und mehreren Geräten, wobei den Geräten jeweils wiederholt ein eigener Zeitschlitz zur Aussendung eines Datentelegramms an den Master zugeordnet ist und wobei dem jeweiligen Gerät in einer Bestätigung mitgeteilt wird, ob ein Datentelegramm dieses Geräts von dem Master empfangen wurde.

Derartige Verfahren mit Bestätigung von Funktelegrammen in zeitschlitzbasierten Funknetzen sind bekannt. Besonders bei Sensornetzwerken, bei denen im Vergleich zu den notwendigen Funkprotokolldaten nur wenige Nutzdaten übertragen werden, soll der gesamte Zeitaufwand für die Bestätigung möglichst gering gehalten werden. Die Nutzdaten werden hierbei in möglichst kurzen Zeitabständen und deterministisch übertragen. Häufig wird hierzu ein zeitschlitzbasiertes Übertragungsverfahren mit Superframe-Struktur verwendet. Jedem Teilnehmer wird in einem Superframe ein bestimmter Zeitschlitz zugeordnet. Diese Zeitschlitze sollten aufgrund der zeitlichen Anforderungen von geringer Dauer sein, damit die Gesamtdauer eines Zyklus kurz bleibt.

Nach dem bisher bekannten Verfahren erfolgt die Bestätigung eines Funktelegramms von einem Sensor durch den Master, indem ein festgelegtes Bestätigungstelegramm innerhalb des den Sensoren jeweils zugewiesenen Zeitschlitzes versendet wird. Dabei ist das Verhältnis von Nutzdaten zu Gesamtdaten sehr ungünstig und die Zeitschlitzlänge muss um die Dauer des Bestätigungstelegramms und die Umschaltzeit der Hardware erweitert werden. Die Bestätigung erfolgt entweder durch Softwarealgorithmen im Master oder direkt in der Funkhardware bei der Erkennung eines gültigen Telegramms nach einem bestimmten Funkstandard. Die Bestätigung durch Hardware hat den Nachteil, dass das Funktelegramm ein bestimmtes Format aufweisen muss.

Die Bestätigung selbst kann nicht verhindert werden. Ein durch den Anwender modifiziertes Telegramm wird nicht erkannt.

Bei einem anderen Verfahren wird das Funknetz auf mindestens zwei Kanälen betrieben, wovon einer zur Versendung der Nutzdatentelegramme und der andere zur Versendung der Bestätigungstelegramme verwendet wird.

Dabei muss allerdings auf der Seite des Masters die Funkhardware mindestens zweifach vorhanden sein. Außerdem muss aufgrund der beschränkten Hardwareressourcen der Sensor die Funkhardware zum Kanalwechsel umparametrieren.

Der Erfindung liegt die Aufgabe zu Grunde, ein Verfahren der oben genannten Art dahingehend zu verbessern, dass die Gesamtdauer für die Bestätigung von Datentelegrammen möglichst gering ist.

Die Aufgabe wird dadurch gelöst, dass in einem Bestätigungstelegramm die Bestätigungen für eine Gruppe von Geräten zusammengefasst werden und dass diese Geräte anhand des empfangenen Bestätigungstelegramms ihre Bestätigung erhalten.

Vorteilhafte Weiterbildungen der Erfindung sind den Unteransprüchen 2 bis 7 zu entnehmen.

Eine besonders vorteilhafte Ausführungsform besteht, wenn gemäß Anspruch 2 die Bestätigung in dem Bestätigungstelegramm bitcodiert erfolgt.

Weiterhin ist es vorteilhaft, wenn gemäß Anspruch 3 die Anzahl der Bestätigungen in einem Bestätigungstelegramm durch seine Nutzdatenlänge bestimmt wird.

Besonders einfach und vorteilhaft ist es, wenn gemäß Anspruch 4 die jeweilige Bitposition der Bestätigung im Bestätigungstelegramm mit der Position des Zeitschlitzes für ein Gerät einer Gruppe korreliert.

Besonders vorteilhaft ist es weiterhin, wenn gemäß Anspruch 5 das Verfahren mehrere Bestätigungstelegramme aufweist, wobei in einem der Bestätigungstelegramme Bestätigungen für eine erste Gruppe von Geräten zusammengefasst sind und in einem anderen der Bestätigungstelegramme Bestätigungen für eine zweite Gruppe von Geräten zusammengefasst sind, die gegenüber den Geräten der ersten Gruppe unterschiedlich sind.

Vorteilhafter Weise wird gemäß Anspruch 6 von den Bestätigungen zu Geräten, deren Zeitschlitze zur Aussendung von Datentelegrammen direkt aufeinander folgen, alternierend die Bestätigung in einem Zeitschlitz einem ersten und die Bestätigung in dem darauf folgenden Zeitschlitz einem zweiten Bestätigungstelegramm zugeordnet. Die Umschaltung von Senden auf Empfangen der Geräte erfordert eine bestimmte Dauer, was dazu führen kann, dass das Gerät welches zuletzt gesendet hat, noch nicht bereit ist, das kurz darauf folgende Bestätigungstelegramm zu empfangen. Der sichere Empfang der Bestätigung wird bei der vorliegenden Ausführungsform aber dadurch gewährleistet, dass die Bestätigung nicht im direkt folgenden ersten Bestätigungstelegramm erfolgt sondern erst im anschließenden zweiten Bestätigungstelegramm.

Ein Ausführungsbeispiel der Erfindung wird im Folgenden anhand einer Zeichnung näher erläutert. Es zeigen:
- FIG 1: ein erfindungsgemäßes Zeitschlitz-Verfahren mit Bestätigungstelegrammen,
- FIG 2: die Zuordnung der Bestätigungsinformation eines Bestätigungstelegramm zu Zeitschlitzen für Datentelegramme nach dem erfindungsgemäßes Zeitschlitz-Verfahren gem. FIG 1 und
- FIG 3: eine alternierende Zuordnung von zur Bestätigung vorgesehenen Zeitschlitzen zu unterschiedlichen Bestätigungstelegrammen.

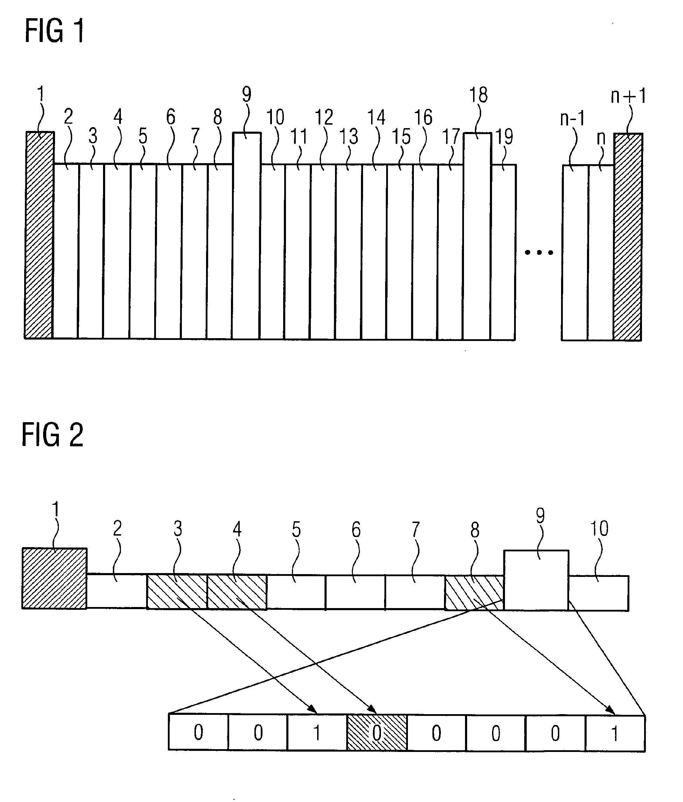

Die Erfindung bezieht sich auf ein Verfahren zur drahtlosen Kommunikation in einem Netzwerk mit einem Master und mehreren Geräten. Dabei ist den Geräten jeweils wiederholt ein eigener Zeitschlitz zur Aussendung eines Datentelegramms an den Master zugeordnet. Dem jeweiligen Gerät wird in einer Bestätigung mitgeteilt, ob ein Datentelegramm dieses Geräts von dem Master empfangen wurde. Erfindungsgemäß werden in einem Bestätigungstelegramm die Bestätigungen für eine Gruppe von Geräten zusammengefasst. Diese Geräte erhalten anhand des empfangenen Bestätigungstelegramms ihre Bestätigung wie dies in FIG 1 dargestellt ist.

FIG 1 zeigt einen Superframe mit einer Vielzahl von Zeitschlitzen 1, 2, 3... .n. Die Zeitschlitzen 1, 2, 3... .n am Anfang und Ende des Superframes dienen zur Synchronisation durch den Master. Die dem Zeitschlitz 1 folgenden Zeitschlitze 2 bis 8 sind Geräten zur Aussendung von Datentelegrammen zugeordnet. Im Zeitschlitz 9 versendet der Master ein Bestätigungstelegramm mit der Information, in welchem der Zeitschlitze 1 bis 8 ein Datentelegramm von dem jeweils zugeordneten Gerät erhalten wurde. Entsprechendes gilt für die daran anschließenden Zeitschlitze 10 bis 17 für die Versendung von Datentelegrammen an den Master und das im Zeitschlitz 18 folgende Bestätigungstelegramm.

Demnach kann es mehrere Bestätigungstelegramme geben, wobei in einem der Bestätigungstelegramme Bestätigungen für eine erste Gruppe von Geräten zusammengefasst sind und in einem anderen der Bestätigungstelegramme Bestätigungen für eine zweite Gruppe von Geräten zusammengefasst sind, die gegenüber den Geräten der ersten Gruppe unterschiedlich sind.

In den Bestätigungstelegrammen erfolgt die Bestätigung bitcodiert, wobei die jeweilige Bitposition der Bestätigung im Bestätigungstelegramm mit der Position der Zeitschlitze im Superframe korreliert. Z.B. entspricht das fünfte Bit im ersten Bestätigungstelegram dem Zeitschlitz 5 des Superframes wie in FIG 2 gezeigt. Hier sind oben Zeitschlitze 1 bis 10 dargestellt. Nur in den Zeitschlitzen 3,4 und 8 wurde von den zugeordneten Geräten ein Datentelegramm ausgesandt. Zu den Zeitschlitzen 1 bis 8 enthält das Datentelegramm im Zeitschlitz 9 zur Bestätigung (s. FIG 2 unten) entsprechend neun Bits. Während die Datentelegramme in den Zeitschlitzen 3 und 8 richtig bestätigt werden, trifft dies für den Zeitschlitz 4 nicht zu.

Den Geräten, die beispielsweise als Sensoren ausgeführt sein können, sind der jeweils zugeordnete Zeitschlitz zur Aussendung eines Datentelegramms im Superframe sowie die Anzahl der Bestätigungen pro Bestätigungstelegramm bekannt. Aufgrund dessen erhält jedes Gerät durch das entsprechend positionierte Bit im Bestätigungstelegramm die zugehörige Bestätigungsinformation.

Die Anzahl der Bestätigungen in einem Bestätigungstelegramm wird durch seine Nutzdatenlänge bestimmt.

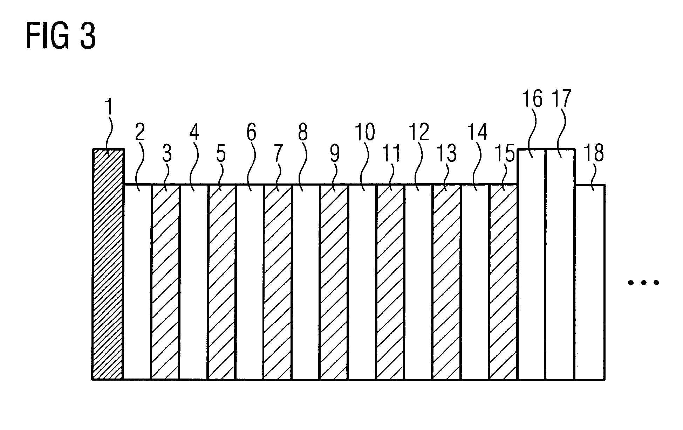

Es besteht auch die Möglichkeit gemäß FIG 3 die Zeitschlitze in alternierenden (gerade/ungerade) Gruppen zusammenzufassen und zwei Bestätigungstelegramme anzuschließen. Das Bestätigungstelegramm im Zeitschlitz 16 bedient beispielsweise die ungeraden, das Bestätigungstelegramm im Zeitschlitz 17 die geraden Zeitschlitze. Dieses Beispiel bietet dann Vorteile, wenn die Umschaltzeit des Geräts zwischen Senden und Empfangen nicht zu vernachlässigen ist und die Länge des Zeitschlitzes vergrößern würde. Demgegenüber muss bei dem Verfahren gemäß FIG 1 das Gerät im Zeitschlitz 8 nach dem Senden unverzüglich empfangsbereit sein, damit es im Zeitschlitz 9 die Bestätigung empfangen kann.

Das oben beschriebene Verfahren zeichnet sich durch eine Entkopplung der gesendeten Datentelegramme und der zugehörigen Bestätigungen durch die Geräte auf. Das Verhältnis zwischen der Dauer für die Kommunikation der Nutzdaten und der Dauer für entsprechende Bestätigungen wird nach dem erfindungsgemäßen Verfahren deutlich verbessert.

## Patentansprüche

1. Verfahren zur drahtlosen Kommunikation in einem Netzwerk mit einem Master und mehreren Geräten, wobei den Geräten jeweils wiederholt ein eigener Zeitschlitz zur Aussendung eines Datentelegramms an den Master zugeordnet ist und wobei dem jeweiligen Gerät in einer Bestätigung mitgeteilt wird, ob ein Datentelegramm des Geräts von dem Master empfangen wurde, **dadurch gekennzeichnet, dass** in einem Bestätigungstelegramm die Bestätigungen für eine Gruppe von Geräten zusammengefasst werden und dass diese Geräte anhand des empfangenen Bestätigungstelegramms ihre Bestätigung erhalten.

2. Verfahren nach Anspruch 1 , **dadurch gekennzeichnet, dass** die Bestätigung in dem Bestätigungstelegramm bitcodiert erfolgt.

3. Verfahren nach Anspruch 1 oder 2, **dadurch gekennzeichnet, dass** die Anzahl der Bestätigungen in einem Bestätigungstelegramm durch seine Nutzdatenlänge bestimmt wird.

4. Verfahren nach einem der vorangehenden Ansprüche, **dadurch gekennzeichnet, dass** die jeweilige Bitposition der Bestätigung im Bestätigungstelegramm mit der Position des Zeitschlitzes für ein Gerät einer Gruppe korreliert.

5. Verfahren nach einem der vorangehenden Ansprüche, **gekennzeichnet durch** mehrere Bestätigungstelegramme, wobei in einem der Bestätigungstelegramme Bestätigungen für eine erste Gruppe von Geräten zusammengefasst sind und in einem anderen der Bestätigungstelegramme Bestätigungen für eine zweite Gruppe von Geräten zusammengefasst sind, die gegenüber den Geräten der ersten Gruppe unterschiedlich sind.

6. Verfahren nach einem der vorangehenden Ansprüche, **dadurch gekennzeichnet, dass** von den Bestätigungen zu Geräten, deren Zeitschlitze zur Aussendung von Datentelegrammen direkt aufeinander folgen, alternierend die Bestätigung in einem der Zeitschlitze einem ersten Bestätigungstelegramm und die Bestätigung in dem darauf folgenden Zeitschlitz einem zweiten Bestätigungstelegramm zugeordnet wird.

7. Verfahren nach einem der vorangehenden Ansprüche, **dadurch gekennzeichnet, dass** die Geräte als Sensoren ausgeführt sind.
